# EUROPEAN PATENT APPLICATION

(11) **EP 0 750 126 A1**
(43) Date of publication of application: **27.12.1996**
(21) Application number: 96304609.9
(22) Date of filing: 21.06.1996
(51) Int. Cl.: F16C 33/78, F16J 15/32

(54) **Antifriction bearing with seal arrangement**

(30) Priority: 21.06.1995 US 382
(71) Applicant: THE TORRINGTON COMPANY, Torrington, Connecticut 06790 (US)
(72) Inventor: McLarty, Daniel R., Burlington, CT 06013 (US); Cherpician, Berci, Burlington, CT 06013 (US)
(74) Representative: Feakins, Graham Allan

(57) **Abstract**

Annular seals (30) seal axial ends of an inner ring - outer ring annulus (25). The inner ring (12) has progressively increasing diameter cylindrical surfaces (14, 16, 18) extending axially inwardly from each axial end surface of the inner ring and each seal has at least one metal shield (32) which is press-fit into the outer ring (10). A resilient member (42) is bonded to the metal shield and has a seal lip (44) in wiping contact with one of the inner ring cylindrical surfaces.

## Description

This invention relates to antifriction bearings.

Various contact-type seal structures have been provided in antifriction bearings to retain lubricant and to exclude debris and other contaminants. Axially spaced annular seals close a radial space between the inner ring and the outer ring of the bearing assembly.

Typically, a contact-type seal has a resilient seal lip fixed to one bearing ring and extending against the other bearing ring to effect a wiping action. However, if the inner and outer bearing rings become "cocked" or otherwise misaligned, either during installation or during use, the resilient seal lip may be moved away from the surface of the opposed bearing ring. As a result, the sealing structure may fail to retain lubricant or may allow debris and other contaminates to enter the bearing.

Other problems may result from misalignment of the inner and outer bearing rings. The resilient seal lip may be moved towards the opposed bearing ring, causing damage to the seal or to the opposed bearing ring. For example, if the resilient lip is mounted on a metal shield fixed to one bearing ring, the metal shield may be forced against the other bearing ring during misalignment.

Another problem which may result from misalignment or other causes is that the seal lip at its wiping contact point on the bearing ring may be forced to extend in the opposite direction from the intended direction. This seal lip inversion causes damage to the lip and may cause damage to the metal shield on which the lip is mounted and permit debris and other contaminants to enter the bearing.

According to the present invention, there is provided a bearing comprising an outer ring, an inner ring, and two axially spaced annular seals sealing an inner ring - outer ring annulus, each seal having substantially one metal shield, said metal shield being press-fit into the outer ring; characterised in that axial end portions of the inner ring have a plurality of axially inwardly progressively increasing outside diameter cylindrical surfaces, thereby providing a plurality of annular shoulders, all of said outside diameter cylindrical surfaces being less than the inside diameter of the outer ring thereby providing said inner ring - outer ring annulus, and a resilient member is bonded to the metal shield; the resilient member having a seal lip in wiping contact with one of said cylindrical surfaces.

For a better understanding of the present invention and to show how the same may be carried into effect, reference will now be made, by way of example, to the accompanying drawing, in which:-
Figure 1 is a cross-sectional fragmentary view of a portion of one form of a bearing,
Figure 2 is a cross-sectional fragmentary view of a portion of a second form of bearing, and
Figure 3 is a cross-sectional fragmentary view of a portion of a third form of bearing.

In the various figures, like parts are referred to by like numbers.

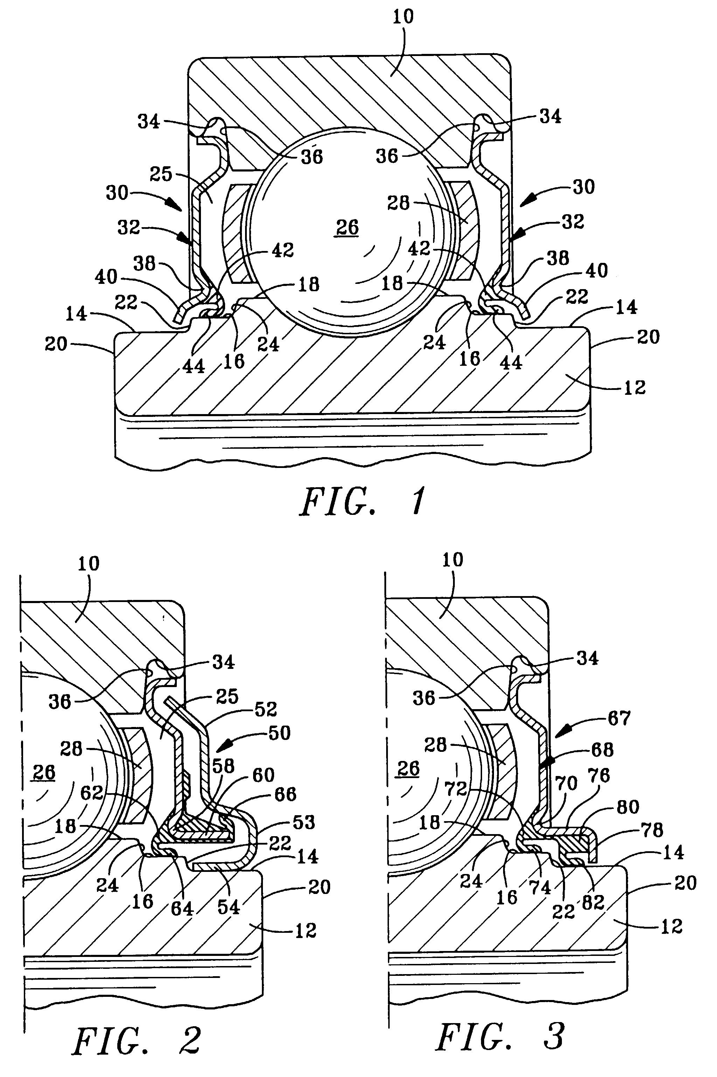

Referring to Figure 1, an antifriction bearing has an outer ring 10 and an inner ring 12. Three stepped or cylindrical surfaces 14, 16 and 18, have progressively increasing outside diameters extending axially inwardly from each axial end surface 20 of the inner ring 12. A radially extending annular shoulder 22 separates the surface 14 from the surface 16. A radially extending annular shoulder 24 separates the surface 16 from the surface 18. The diameters of all of the outside diameter cylindrical surfaces of the inner ring are less than the inside diameter of the outer ring, thereby providing an inner ring - outer ring annulus 25.

Rolling members such as balls 26 are separated by a retainer 28 and roll on raceways of the outer and inner bearing rings 10 and 12 to provide free relative rotation of the bearing rings.

A pair of axially spaced annular seals 30 seal the inner ring - outer ring annulus 25. The seal includes an annular metal shield 32. The metal shield is press-fit in a groove 34 of the outer ring 10 and is located axially by abutment with a shoulder 36. The metal shield has an axially inwardly curved portion 38 located radially outwardly from the axially middle cylindrical surface 16 of the inner ring 12. The metal shield also has a portion 40 extending from the curved portion and overlapping the shoulder 22 separating the cylindrical surface 16 from the cylindrical surface 14. Because the metal shield portion 40 overlaps the annular shoulder 22, the shoulder will limit any mechanical damage to the shield such as bending or denting. A resilient member 42 is bonded to the metal shield 40. The resilient member has a radially inwardly and axially outwardly extending seal lip 44 in wiping contact with the axial middle cylindrical surface 16 of the inner ring 12. The radial length of the annular shoulder 24 is substantially equal to the radial length of the seal lip 44. Also, the wiping contact point of the seal lip on surface 16 of the inner ring is sufficiently close to the annular shoulder 24 to prevent seal lip inversion.

Referring to the form shown in Figure 2, an annular seal 50 seals the annulus 25. An annular shield 52 has an axially outwardly curved portion 53 adjacent its radially inner end and is mounted on the inner ring 12 by press-fit of a bearing shield mounting flange 54 in the inner ring outermost cylindrical surface 14 and against the shoulder 22.

A shield 56 is press-fit in the groove 34 of the outer ring 10 and is located axially by abutment with the shoulder 36. The shield 56 has an axially inwardly curved portion 58 at its radially inner end, and an axially extending portion 60. The curved portion 58 is located radially outwardly from the axially middle cylindrical surface 16 of the inner ring 12 and the axially extending portion 60 overlaps the cylindrical surface 14 of the inner ring and extends into the space provided by the axially outwardly curved portion 53 of the shield 52.

A resilient member 62 is bonded to the curved portion 58 and axially extending portion 60. The resilient member has a radially inwardly and axially outwardly extending lip seal 64 in wiping contact with the inner ring 12 axially middle cylindrical surface 16. The radial length of the annular shoulder 24 is substantially equal to the radial length of the lip seal 64 and the wiping contact point of the seal lip on cylindrical surface 16 is sufficiently close to the shoulder 24 to prevent the inversion of the seal lip 64. The resilient member 62 has a second seal lip 66 located at the end of the axially extending portion 60 of the shield 56. The seal lip 66 extends radially outwardly and axially inwardly into wiping contact with the curved portion 53 of the metal shield 52.

Referring to the form shown in Figure 3, a seal 67 includes an annular metal shield 68 press-fit in the groove 34 and axially located by abutment with the shoulder 36. The metal shield 68 has an axially inwardly curved portion 70 located radially outwardly from the axially middle cylindrical surface 16 of the inner ring 12. A resilient member 72 having a seal lip 74 is bonded to the curved portion 70 of the metal shield 68. The seal lip extends radially inwardly and axially outwardly into wiping contact with the inner ring surface 16. The radial length of the annular shoulder 24 is substantially equal to the radial length of the seal lip 74 and the wiping contact point of the seal lip on the surface 16 is sufficiently close to the annular shoulder to prevent seal lip inversion.

The metal shield 68 has a portion 76 extending axially outwardly from the curved portion 70 and overlapping the inner ring axially outermost cylindrical surface 14. A portion 78 extends radially inwardly from the portion 76 and overlaps the shoulder 22.

A resilient member 80 is bonded to the portions 76 and 78 and has a radially inwardly and axially outwardly extending seal lip 82 in wiping contact with axial outermost cylindrical surface 14 of the inner ring 12. The radial length of annular shoulder 22 is substantially equal to the radial length of the second seal lip 82 and the wiping contact point of the lip seal on surface 14 is sufficiently close to the annular shoulder 22 to prevent seal lip inversion.

## Claims

1. A bearing comprising an outer ring (10), an inner ring (12), and two axially spaced annular seals (30) sealing an inner ring - outer ring annulus (25), each seal having substantially one metal shield (32), said metal shield being press-fit into the outer ring (10); characterised in that axial end portions of the inner ring have a plurality of axially inwardly progressively increasing outside diameter cylindrical surfaces (14, 16, 18), thereby providing a plurality of annular shoulders (22, 24), all of said outside diameter cylindrical surfaces being less than the inside diameter of the outer ring thereby providing said inner ring - outer ring annulus (25), and a resilient member (42) is bonded to the metal shield (32); the resilient member having a seal lip (44) in wiping contact with one of said cylindrical surfaces (14, 16, 18).

2. A bearing according to claim 1, wherein there are three outside diameter cylindrical surfaces (14, 16, 18) on the inner ring (12), and the seal lip (44) is in wiping contact with the axial middle surface (16).

3. A bearing according to claim 2, wherein the radial length of the annular shoulder (24) separating the axial inside cylindrical surface (18) and the axial middle cylindrical surface (16) is substantially equal to the radial length of the seal lip (44) and the wiping contact point of the seal lip on the axial middle cylindrical surface (16) is sufficiently close to said annular shoulder (24) to prevent seal lip inversion.

4. A bearing according to claim 2 or 3, wherein the metal shield (32) has an axially inwardly curved portion (38) located radially outwardly from the axially middle cylindrical surface (16) of the inner ring, the resilient member (42) being bonded to the curved portion; and the metal shield (32) also having a portion extending from the curved portion and overlapping the shoulder (22) separating the axially middle cylindrical surface (16) and the axially outermost cylindrical surface (14).

5. A bearing according to claim 4, wherein the metal shield (32) has a portion (58) extending axially outwardly from the curved portion (38) and overlapping the inner ring axially outermost cylindrical surface (14) and another portion (78) extending radially inwardly from that portion (58) extending axially outwardly and overlapping the shoulder (22) separating the axial middle cylindrical surface (16) and the axial outermost cylindrical surface (14).

6. A bearing according to claim 5, wherein a resilient member (66) is bonded to the metal shield axially outwardly extending portion (58) and radially inwardly extending portion (78), said resilient member having a second seal lip (82) in wiping contact with the axial outermost cylindrical surface (14) of the inner ring, the radial length of the annular shoulder (22) separating the axial middle cylindrical surface (16) of the inner ring and the axial outermost cylindrical surface (14) being substantially equal to the radial length of the second seal lip (82) and the wiping contact point of the second seal lip on the axial outermost cylindrical surface (14) being sufficiently close to said annular shoulder (22) to prevent seal lip inversion.
